## Europäisches Patentamt
## European Patent Office
## Office européen des brevets

(19)

(11) Veröffentlichungsnummer: **0 255 567 B1**

(12) **EUROPÄISCHE PATENTSCHRIFT**

(45) Veröffentlichungstag der Patentschrift:
25.07.90

(51) Int. Cl.⁵: **B23Q 3/157**

(21) Anmeldenummer: **87102309.9**

(22) Anmeldetag: **18.02.87**

(54) Werkzeugwechsler für Universal-Fräs- und Bohrmaschinen.

(30) Priorität: **29.07.86 DE 3625537**

(43) Veröffentlichungstag der Anmeldung:
**10.02.88 Patentblatt 88/6**

(45) Bekanntmachung des Hinweises auf die Patenterteilung:
**25.07.90 Patentblatt 90/30**

(84) Benannte Vertragsstaaten:
**CH DE FR GB IT LI**

(56) Entgegenhaltungen:
**EP-A- 0 144 912**
**DD-A- 237 807**
**DD-A- 237 809**
**DE-A- 2 110 943**
**DE-A- 3 017 613**
**DE-A- 3 426 895**
**DE-B- 1 922 320**

(73) Patentinhaber: **MAHO Aktiengesellschaft,
Postfach 1280 Tiroler Strasse 85, D-8962 Pfronten(DE)**

(72) Erfinder: **Babel, Werner, Achweg 19,
D-8962 Pfronten-Meilingen(DE)**

(74) Vertreter: **Patentanwälte Beetz sen. - Beetz jun. Timpe -
Siegfried - Schmitt-Fumian, Steinsdorfstrasse 10,
D-8000 München 22(DE)**

**Beschreibung**

Die Erfindung betrifft einen Werkzeugwechsler für Universal-Fräs- und Bohrmaschinen sowie für Bearbeitungszentren der im Oberbegriff des Patentanspruchs 1 bzw. 2 angegebenen Gattung. Derartige Werkzeugwechsler können wahlweise die Horizontal- und die Vertikalspindel entsprechend dem jeweiligen Bearbeitungsprogramm bedienen. Greifzangen zur Aufnahme und Halterung der Werkzeuge sind in mehreren Richtungen und um mehrere Achsen derart bewegbar, daß die Werkzeuge einem Magazin entnommen und wahlweise in die Horizontalspindel oder in die Vertikalspindel eingesetzt werden können.

Die Werkzeugwechsel bei Universal-Fräs- und Bohrmaschinen zu automatisieren, ist nur dann technisch sinnvoll, wenn gleichzeitig auch die Maschinen selbst von der Horizontal-Bearbeitung zur Vertikal-Bearbeitung automatisch umgerüstet werden können, was nur bei wenigen Spezialtypen der Fall ist. Für eine derartige Werkzeugmaschine ist aus der DE-A 3 344 084 ein Werkzeugwechsler bekannt, der aus einer von der Maschine gesonderten Tragkonstruktion für ein Tellermagazin und einen mit einem Greiferkopf ausgestatteten Greifarm besteht. Dieser Greifarm ist für den Werkzeugtransport zwischen der jeweiligen Spindel und einem Werkzeugmagazin horizontal längsverschiebbar und um seine Längsachse verdrehbar ausgebildet. Nachteilig bei dieser bekannten Ausführung ist der lange Transportweg des Greifarms und die dadurch notwendigen formsteifen Führungen für den an seinem vorderen Ende mit der Hubmechanik, der Greifzange und dem Werkzeug belasteten Führungsarm. Darüber hinaus ist nur eine Greifzange am freien Ende des Führungsarms vorgesehen, was die Werkzeugwechselzeiten in unerwünschter Weise verlängert. Schließlich erfordert dieser bekannte Werkzeugwechsler einen erheblichen Platz und kann nicht in Bearbeitungszentren integriert werden.

Aus der DE-A 3 017 613 ist eine gattungsgemäße Werkzeugwechselvorrichtung für eine Werkzeugmaschine mit Horizontal- und Vertikalspindel bekannt, die einen an einem Greiferarm schwenkbar gelagerten Doppelgreifer enthält. Der um seine Längsachse verdrehbare Greiferarm ist in zwei Richtungen parallel und senkrecht zur Spindelachse verschiebbar geführt. Dieser Werkzeugwechsler ist jedoch hinsichtlich seiner Arbeitsweise an einen besonderen Werkzeugmaschinen-Typ gebunden, bei welchem die beiden Spindeln in einem gemeinsamen um seine vertikale Achse verdrehbaren Kopf gelagert sind. Für den Wechsel der Werkzeuge der Horizontalspindel muß der Kopf aus seiner Normallage um 90° verdreht und seitlich versetzt werden, damit die Greifzange ohne Kollision an die nunmehr seitlich positionierte Spindel heranfahren und das Werkzeug ergreifen kann. Ein derartiger Maschinentyp ist jedoch technisch außerordentlich aufwendig und es ergeben sich Genauigkeitsprobleme durch das in den Drehkopf eingebaute Umlenkgetriebe für die Spindelantriebe.

Darüber hinaus stehen die beiden Greifzangen des Doppelgreifers unter einem rechten Winkel zueinander und ermöglichen die Erfassung und Handhabung jeweils nur eines einzigen Werkzeugs.

Aufgabe der Erfindung ist es, einen Werkzeugwechsler für eine programmgesteuerte Universal-Fräs- und Bohrmaschine mit Horizontalspindel und einem gesondert an dem Spindelstock montierbaren Vertikalfräskopf zu schaffen, die eine günstige Ausnutzung des an der Werkzeugmaschine vorhandenen Raumes gestattet und bei relativ einfacher stabiler Konstruktion kurze Wechselzeiten ermöglicht.

Diese Aufgabe wird durch die im kennzeichnenden Teil der Patentansprüche 1 bzw. 2 angegebenen Merkmale gelöst.

Da bei der ersten Lösung nach Patentanspruch 1 die Greifzangen an den Teleskoparmen montiert sind, deren Mittelachsen – in der jeweiligen Wechselposition – sich unter einem spitzen Winkel in der jeweiligen Spindelachse schneiden, sind schnelle Wechselvorgänge möglich, weil der eine Teleskoparm zur Aufnahme des "verbrauchten" Werkzeugs dient und der andere Teleskoparm das "neue" Werkzeug trägt. Bei der zweiten Lösung nach dem Patentanspruch 2 ergeben sich schnelle Werkzeugwechsel durch den am Schwenkglied motorisch bewegbaren Schlitten, der an einer Seitenfläche die abgewinkelten und parallel nebeneinander einzeln verfahrbaren Greifzangen trägt.

Eine besonders zweckmäßige Ausgestaltung einer Greifzange zeichnet sich dadurch aus, daß die beiden Backen der Greifzangen in Ausschnitten eines Tragkörpers begrenzt schwenkbar gelagert sind und an ihren Enden obere und untere Schrägflächen aufweisen, die beim Anfahren eines Werkzeughalters eine Öffnungsbewegung beider Backen gegen die Kraft einer Druckfeder erzeugen. Dies Greifzange benötigt keinen gesonderten Stellenantrieb zum Öffnen ihrer Backen, weil die Schrägflächen an ihren nach innen eingezogenen Backenenden so ausgelegt sind, daß sie beim Anfahren eines Werkzeughalters in Anlage mit entsprechend geformten Gegenflächen gelangen und dabei gegen die Kraft einer Feder geöffnet werden.

Weitere Einzelheiten und Vorteile der Erfindung ergeben sich aus der folgenden Beschreibung von Ausführungsbeispielen des neuen Werkzeugwechslers anhand der Zeichnung. Es zeigen:

Fig. 1 eine erste Ausführung eines Werkzeugwechslers beim Aus- und Einbau eines Werkzeugs in die Horizontalspindel;

Fig. 2 den Werkzeugwechsler nach Fig. 1 bei der Bedienung der Vertikalspindel – jeweils in perspektivischer Darstellung;

Fig 3, 4 eine zweite Ausführung eines Werkzeugwechslers beim Aus- und Einbau eines Werkzeugs in die Horizontalspindel bzw. in die Vertikalspindel;

Fig 5 den Werkzeugwechsler mit der Maschine nach Fig. 3 in schematischer Draufsicht;

Fig. 6 eine neue Greifzange in schematischer Draufsicht.

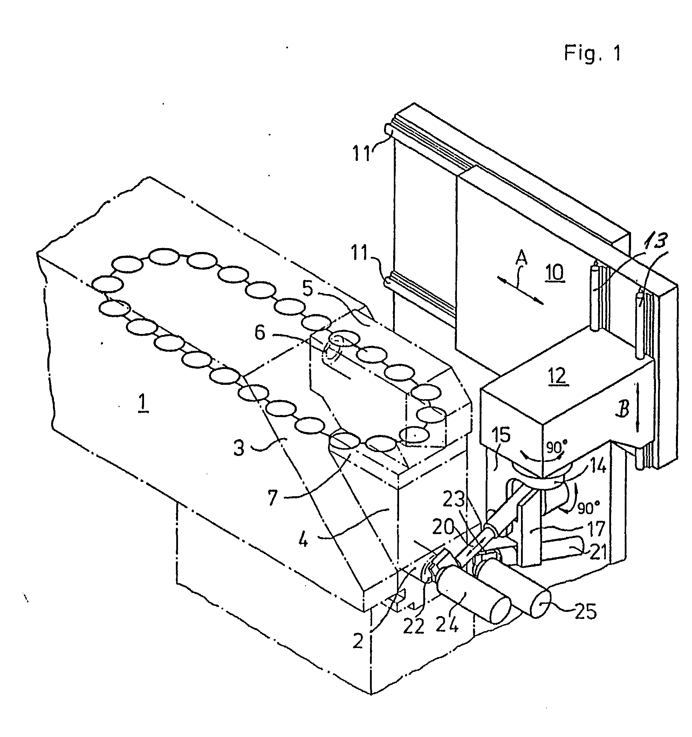

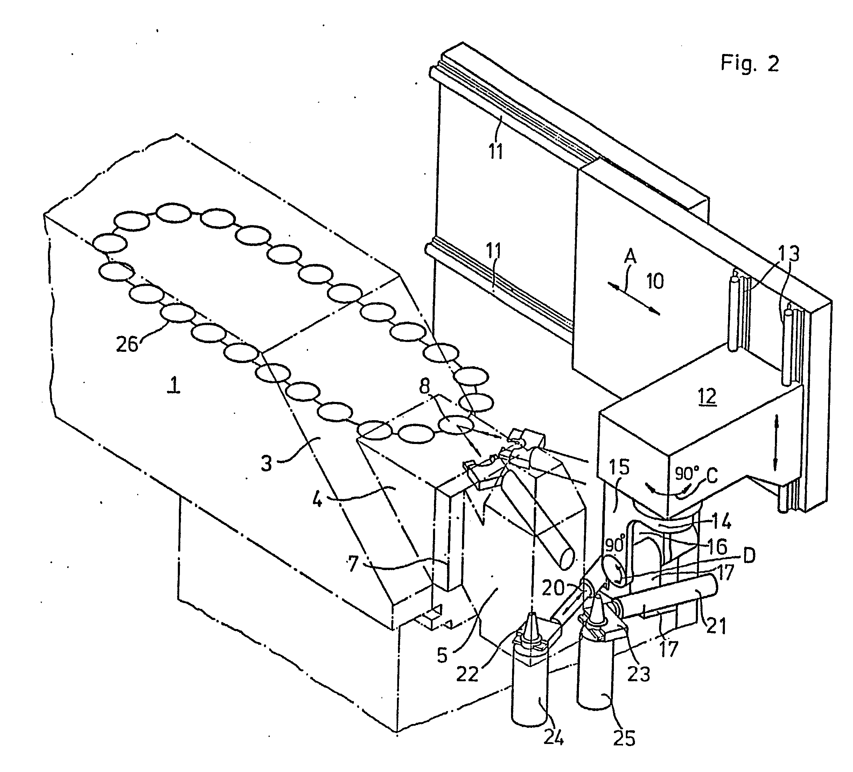

Die in der Zeichnung dargestellte Werkzeugmaschine ist ein programmgesteuertes Bohr- und Fräszentrum, von dem nur der in Linearführungen am Ständer horizontal verfahrbare Spindelstock 1 gezeigt ist. Im unteren Teil des Spindelstocks 1 befindet sich die Horizontalspindel 2, welche über nicht dargestellte Antriebe in Drehbewegung versetzt wird. Die Stirnfläche 3 oberhalb der Horizontalspindel 2 ist unter 45° nach rückwärts geneigt und trägt einen Schwenkkopf 4, der großflächig mittels einer entsprechend abgeschrägten Rückfläche abgestützt ist und um eine zur 45°-Schrägfläche senkrechte Mittelachse verdreht werden kann. An einer Endfläche des Schwenkkopfes 4 ist ein Vertikalfräskopf 5 mit einer darin gelagerten Vertikalspindel 6 über ein Zwischenstück 7 montiert. In der Stellung nach Fig. 1 befindet sich der Vertikalfräskopf in seiner oberen Außerbetriebs-Lage und in der Stellung nach Fig. 2 in seiner Arbeitsposition. Seitlich neben dem Spindelstock 1 ist ein Werkzeugmagazin 26 montiert, dessen Werkzeug-Wechsel-Position 8 so plaziert ist, daß sie durch entsprechende Bewegungsfolgen des Werkzeugwechslers von den Greifzangen ohne Kollision mit dem Spindelstock oder dem Vertikalkopf erreicht werden kann.

Bei der Ausführung nach Fig 1, 2 enthält der Werkzeugwechsler einen Schlitten 10, der hochkant in Horizontalführungen 11 an einem stationären Maschinenteil, z. B. am Maschinenständer, an einer gesonderten Konsole, an einer Wand der Schutzkabine oder auch an einem Bedienungsfahrzeug, in Pfeilrichtung A motorisch mittels eines Linearantriebes, z. B. Stellzylinder oder Spindeltriebe, verfahrbar ist. Am vorderen Teil des Schlittens 10 ist ein formsteifer Support 12 in Vertikalführungen 13 in Pfeilrichtung B motorisch bewegbar geführt. Dieser etwa rechteckige Support 12 trägt an seinem vorderen vorstehenden Ende einen Halter in Form eines Drehbügels 14, der um eine vertikale Achse in Pfeilrichtung C um jeweils 90° motorisch verdrehbar ist. Die beiden Schenkel 15 dieses Drehbügels 14 ragen seitlich neben der Drehachse nach unten und bilden auf diese Weise einen Freiraum 16 (Fig. 2). Zwischen beiden Schenkeln 15 ist ein Schwenkglied 17 von etwa T-förmigem Querschnitt in Pfeilrichtung D um 90° motorisch schwenkbar gelagert, an dessen beiden Seitenstegen je ein Teleskoparm 20, 21 befestigt ist. Jeder Teleskoparm 20, 21 trägt an seinem vorderen Ende eine Greifzange 22, 23 zur lösbaren Aufnahme und Handhabung je eines Werkzeugs 24, 25. Die Anordnung der beiden Teleskoparme 20, 21 ist so getroffen, daß ihre Längsachsen in einer gemeinsamen Ebene unter einem spitzen Winkel zueinander geneigt sind und sich in der Mittelachse der Horizontalspindel 2 (Fig. 1) bzw. der Vertikalspindel 6 (Fig. 1) schneiden.

Der beschriebene Werkzeugwechsler kann die im folgenden beschriebenen Werkzeugwechsel-Vorgänge ausführen:

Zum Bedienen der Horizontalspindel 2 gemäß Fig. 1 sei angenommen, daß das Werkzeug 24 gegen das neue Werkzeug 25 ausgetauscht werden soll. In der in Fig. 1 gezeigten Wechselstellung ist der Teleskoparm 20 ausgefahren und seine Greifzange 22 hat das noch in der Horizontalspindel 2 gehaltene Werkzeug 24 seitlich erfaßt. Durch Zurückfahren des Spindelstocks 1 oder auch durch eine Vorwärtsbewegung des Schlittens 10 wird dieses Werkzeug 24 aus der Spindel 2 herausgezogen Daraufhin fährt der Teleskoparm 20 ein und anschließend - oder auch gleichzeitig - fährt der zweite Teleskoparm 21 aus, so daß das von seiner Greifzange 23 gehaltete neue Werkzeug 25 genau vor die Horizontalspindel 2 bewegt wird, wobei die Werkzeugachse mit der spindelachse fluchtet. Durch Ausfahren des Spindelstocks 2 oder durch eine Rückwärtsbewegung des Schlittens 10 wird das neue Werkzeug 25 in die Horizontalspindel 1 eingeschoben Durch die gegenseitige Neigung der Achsen der beiden Teleskoparme 20, 21 werden Kollisionen bei den jeweiligen Ausfahr- und Einziehbewegungen vermieden.

Anschließend erfolgt das Einfahren des Teleskoparmes 21, so daß nunmehr beide Greifzangen 24, 25 sich in einer zurückgezogenen Lage befinden. Bei der dargestellten Ausführung werden danach das Schwenkglied 17 und anschließend der Drehbügel 14 jeweils um 90° gedreht, um die Greifzangen 22, 23 aus der Bewegungsbahn des Spindelstocks 2 zu bringen. Der Schlitten 10 fährt in Pfeilrichtung A nach hinten und das Schwenkglied 17 schwenkt dabei in seine in Fig 2 gezeigte Lage. Der Teleskoparm 21 fährt aus und seine Greifzange 23 holt sich aus dem Magazin 26 ein in der Position 8 bereitgestelltes Werkzeug und fährt wieder ein Dann fährt der das "alte" Werkzeug 24 tragende Teleskoparm 20 aus, legt das Werkzeug 24 im freigewordenen Magazinplatz 8 ab und fährt wieder in seine Wartestellung zurück. Das Magazin 26 kann jetzt wieder ein neues Werkzeug bereitstellen. Bei einem neuen Werkzeugwechsel beginnt der Wechselvorgang mit dem Vorfahren des Schlittens 10.

Der Werkzeugwechsel in die Vertikalspindel 5 vollzieht sich in ähnlicher Weise wie der vorstehend beschriebene Wechselvorgang, wobei lediglich das Schwenkglied 17 in den beiden Schenkeln 15 des Drehbügels 14 um 90° aus der Stellung nach Fig. 1 in die in Fig 2 dargestellte Position verschwenkt worden ist, so daß sich die beiden Teleskoparme 20, 21 mit den Greifzangen 22, 23 unter dem in der Arbeitsstellung befindlichen Vertikalfräskopf 5 befinden. Aufgrund der gegenseitigen Neigung der beiden Teleskoparme 20, 21 unter einem spitzen Winkel und des Schnittpunktes ihrer Achsen in der Mittelachse der Vertikalspindel, befindet sich das vom jeweils ausgefahrenen Teleskoparm 20 bzw. 21 gehaltete Werkzeug in der Spindelachse, so daß durch eine Vertikalbewegung des Supports 12 in seinen Führungen das Werkzeug in die Vertikalspindel eingeschoben bzw. herausgezogen werden kann.

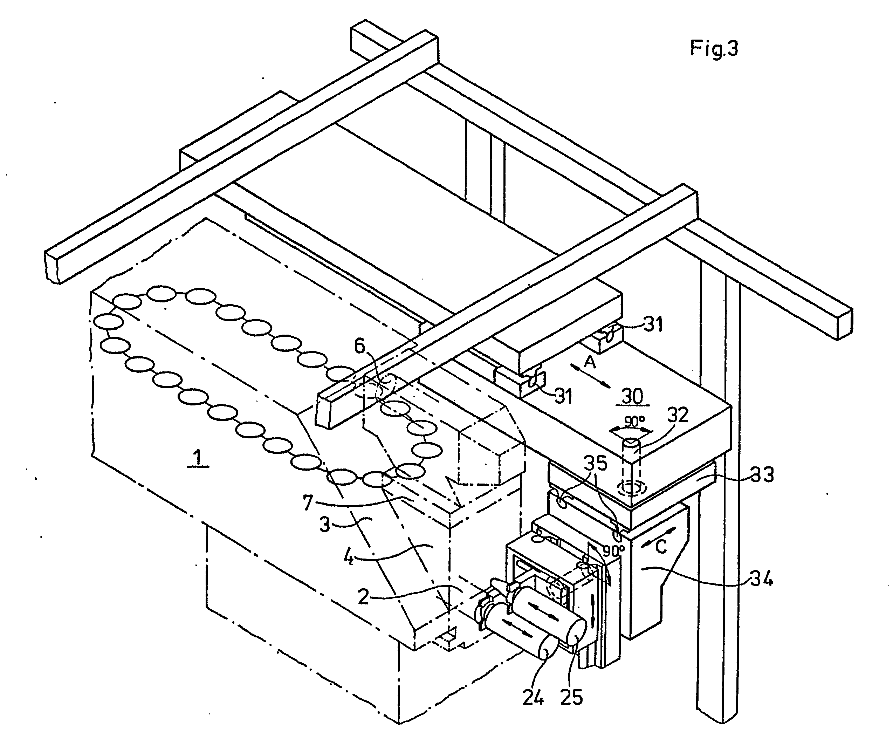

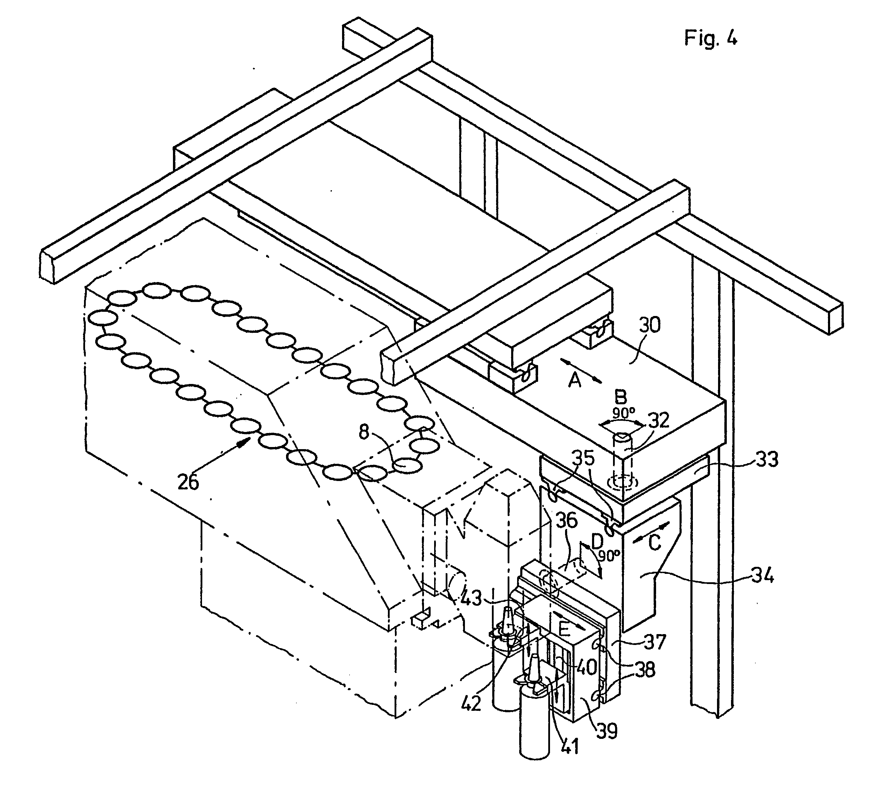

Der in den Fig 3, 4 dargestellte Werkzeugwechsler kann bei einer gleichartigen Werkzeugmaschine eingesetzt werden, deren einzelne Bauteile auch mit den gleichen Bezugszeichen wie die Maschine nach den Fig. 1, 2 gekennzeichnet sind. Bei diesem Werkzeugwechsler nach Fig. 3, 4 ist der Transportschlitten 30 in Längsführungen 31 unter einer Tragschiene in Richtung des Doppelpfeils A verfahrbar aufgehängt. An seinem vorderen Ende ist an einem vertikalen Drehzapfen 32 eine Tragplatte 33 um 90° in Richtung des Doppelpfeils B verdrehbar befestigt, an deren Unterseite der Support 34 in Parallelführungen 35 in Richtung des Doppelpfeils C verschiebbar angeordnet ist. Im linken unteren Eckbereich des Supports 34 ist ein horizontaler Drehzapfen 36 gelagert, an dessen vorstehendem Ende ein plattenförmiges Schwenkglied 37 in einem Eckbereich befestigt ist. Durch einen - nicht dargestellten - Antrieb wird das Schwenkglied 37 in Richtung des Doppelpfeils D um 90° zwischen den in den Fig. 3 und 4 dargestellten Endstellungen mittels des Drehzapfens 36 verschwenkt. An seiner vorderen Stirnfläche weist das Schwenkglied 37 Parallelführungen 38 auf, an denen ein Schlitten 39 in Richtung des Doppelpfeils E verfahrbar ist. An zwei stirnseitigen Geradführungen 40 des Schlittens 39 sind zwei winkelförmige Greifzangen 41, 42 einzeln zwischen Endanschlägen 43 bewegbar gehalten.

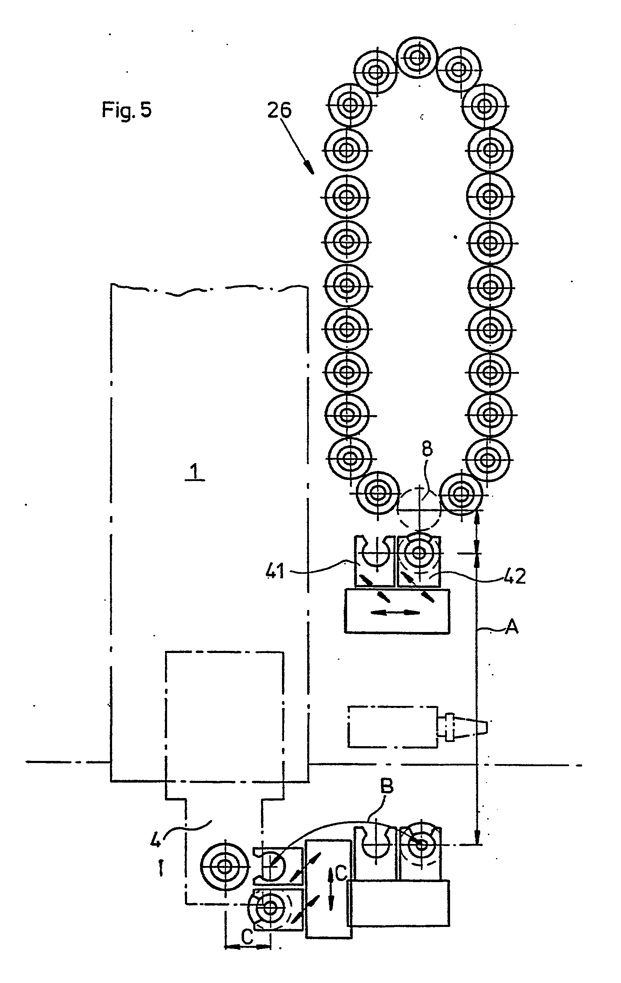

Der Bewegungsablauf der Greifzangen 41, 42 zwischen der Wechselposition 8 des Werkzeugmagazins 26 sowie der verschiedenen Trag- und Drehglieder ergibt sich aus den Darstellungen der Fig. 3 bis 5. Das Kettenmagazin 26 ist neben dem Werkzeugwechsler und oberhalb des Spindelstocks 1 so angeordnet, daß Kollisionen mit den Einzelteilen des Werkzeugwechslers bei deren Bewegung vermieden werden. Dementsprechend sind auch die Verschiebewege der bewegten Bauteile und die Größe der jeweiligen Schwenkbewegungen gewählt, wie dies schematisch in Fig. 5 dargestellt ist.

Es sei darauf hingewiesen, daß alle vorstehend erläuterten Bewegungen der einzelnen Bauteile der Werkzeugwechsler mit Hilfe von Antriebsmotoren erfolgen, die von der Steuerung der Werkzeugmaschine angesteuert werden. Auf diese Weise wird ein vollautomatischer Betrieb der Werkzeugwechselvorgänge erreicht, und zwar unabhängig davon, ob die Horizontalspindel oder die Vertikalspindel bedient wird.

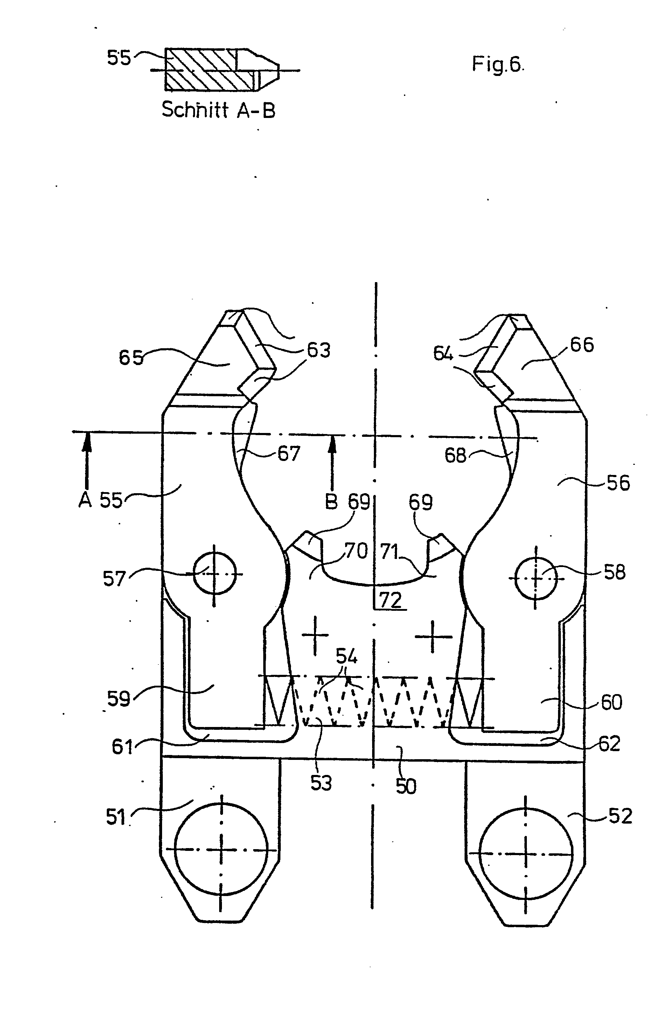

Die in Fig. 6 schematisch dargestellte Greifzange wird bei den vorstehend beschriebenen Werkzeugwechslern eingesetzt. Ein formsteifer Tragkörper 50 ist über zwei rückwärtige Ansätze 51, 52 an einem - nicht dargestellten - Träger montiert. Im Tragkörper 50 befindet sich eine Querbohrung 53, in der eine Druckfeder 54 angeordnet ist. Zwei Backen 55, 56 sind über je einen Drehzapfen 57, 58 am Drehkörper 50 angelenkt und weisen rückwärtige Ansätze 59, 60 auf, die in je einem sich schräg nach rückwärts erweiternden Ausschnitt 61, 62 des Tragkörpers 50 aufgenommen sind und die Öffnungs- und Schließbewegungen der beiden Backen 55, 56 begrenzen. An den gegenüberliegenden geraden Seitenflächen der beiden Ansätze 59, 60 stützt sich die Druckfeder 54 mit ihren Enden ab. An den vorderen Enden der beiden Backen 55, 56 sind Schrägflächen 63, 64 zu beiden Seiten einer nach innen vorspringenden Spitze 65, 66 ausgebildet. Weitere Schrägflächen 67, 68, 69 befinden sich im Bereich der größten Maulweite der beiden Backen 55, 56 sowie an stirnseitigen Laschen 70, 71 des von den Backen 55, 56 seitlich begrenzten Mittelteils 72 des Tragkörpers 50. Die Schrägflächen sind so ausgebildet und angeordnet, daß sie bei Bewegungen der Greifzange in Längsrichtung mit entsprechenden Gegenflächen am Werkzeugmagazin bzw. am Werkzeughalter in Anlage gelangen, wodurch die Backen 55, 56 seitlich verschwenken und dabei das jeweilige Werkzeug, d. h. dessen Aufnahmekegel, erfassen bzw. freigeben, und zwar ohne gesonderten Antrieb.

**Patentansprüche**

1. Werkzeugwechsler für die Horizontal- und Vertikalspindel von Universal-Fräs- und Bohrmaschinen, bestehend aus einer Tragkonstruktion für mindestens eine Greifzange (22, 23), die zwischen der Wechselposition eines Werkzeugmagazins (26) und wahlweise der Horizontal- bzw. der Vertikalspindel motorisch gesteuert bewegbar ist, wobei zwei Greifzangen (22, 23) mittels einer Halterung (20, 21) an einem Schwenkglied (17) montiert sind, dessen horizontale Drehachse – in der jeweiligen Wechselposition – quer zu den Achsen der Horizontal- und der Vertikalspindel verläuft, dadurch gekennzeichnet, daß ein Support (12) für das Schwenkglied (17) an einem horizontal verfahrbaren Transportschlitten (10) verschiebbar montiert ist und daß die Halterung für die Greifzangen (22, 23) durch zwei Teleskoparme (20, 21) gebildet ist, deren Mittelachsen – in der Wechselposition – sich unter einem spitzen Winkel in der jeweiligen Spindelachse schneiden.

2. Werkzeugwechsler für die Horizontal- und Vertikalspindel von Universal-Fräs- und Bohrmaschinen, bestehend aus einer Tragkonstruktion für mindestens eine Greifzange (41, 42), die zwischen der Wechselposition eines Werkzeugmagazins (26) und wahlweise der Horizontal- bzw. der Vertikalspindel motorisch gesteuert bewegbar ist, wobei zwei Greifzangen (41, 42) mittels einer Halterung (39) an einem Schwenkglied (37) montiert sind, dessen horizontale Drehachse – in der jeweiligen Wechselposition – quer zu den Achsen der Horizontal- und der Vertikalspindel verläuft, dadurch gekennzeichnet, daß ein Support (34) für das Schwenkglied (37) an einem horizontal verfahrbaren Transportschlitten (30) verschiebbar montiert ist und daß die Halterung für die Greifzangen (41, 42) ein am plattenförmigen Schwenkglied (37) verschiebbarer Schlitten (39) ist, an dessen Stirnseite die beiden Greifzangen (41, 42) parallel nebeneinander einzeln verschiebbar montiert sind.

3. Werkzeugwechsler nach Anspruch 1, dadurch gekennzeichnet, daß an der Unterseite des Supports (12) ein Drehbügel (14) um die Vertikalachse verdrehbar montiert ist, in dessen nach unten ragenden Schenkeln (15) das Schwenkglied (17) mit den beiden Teleskoparmen (20, 21) gelagert ist.

4. Werkzeugwechsler nach Anspruch 2, dadurch gekennzeichnet, daß die Greifzangen (41, 42) abgewinkelt und mit einem Schenkel am Schlitten (39) verschiebbar geführt sind.

5. Werkzeugwechsler nach Anspruch 2, dadurch gekennzeichnet, daß der Support (34) an seiner vorderen Stirnseite das Schwenkglied (37) trägt und um 90° verdrehbar mittels eines Vertikalbolzens (32) am Transportschlitten (30) montiert ist.

6. Werkzeugwechsler nach einem der Ansprüche 1 bis 5, dadurch gekennzeichnet, daß die beiden Backen (55, 56) der Greifzangen (22, 23; 41, 42) in Ausschnitten (61, 62) eines Tragkörpers (50) begrenzt schwenkbar gelagert sind und an ihren Enden obere und untere Schrägflächen (63, 64) aufweisen, die beim Anfahren eines Werkzeughalters eine Öffnungsbewegung beider Backen (55, 56) gegen die Krafte einer Druckfeder (54) erzeugen.

**Claims**

1. A tool-changer for the horizontal and vertical spindles of universal milling, drilling and boring machines, comprising a structure for bearing at least one pair of grippers (22, 23) movable under mechanical control between the position for changing a tool magazine (26) and the horizontal or vertical spindle as required, two pairs of grippers (22, 23) being mounted by means of a holder (20, 21) on a swivel member (17) whose horizontal axis of rotation, in the respective change position, extends transversely to the axes of the horizontal and the vertical spindle, characterised in that a support (12) for the swivel member (17) is movably mounted on a horizontally movable conveying slide (10) and the holder for the grippers (22, 23) comprises two telescopic arms (20, 21) whose central axes, in the change position, intersect at an acute angle at the respective spindle axis.

2. A tool-changer for the horizontal and vertical spindles of universal milling, drilling and boring machines, comprising a structure for bearing at least one pair of grippers (41, 42) movable under mechanical control between the position for changing a tool magazine (26) and the horizontal or vertical spindle as required, two pairs of grippers (41, 42) being mounted by means of a holder (39) on a swivel member (37) whose horizontal axis of rotation, in the respective change position, extends transversely to the axes of the horizontal and the vertical spindle, characterised in that a support (34) for the swivel member (37) is movably mounted on a horizontally movable conveying slide (30) and the holder for the grippers (41, 42) is a slide (39) movable on the swivel member (37) which is in the form of a plate, the two grippers (41, 42) being mounted on the end face of the slide so as to be individually movable and parallel to one another.

3. A tool-changer according to claim 1, characterised in that a revolving shackle (14) is mounted on the underside of the support (12) so as to be rotatable around the vertical axis, and the swivel member (17) with the two telescopic arms (20, 21) is mounted in the downwardly-projecting limbs (15) of the revolving shackle.

4. A tool-changer according to claim 2, characterised in that the grippers (41, 42) are bent and one limb of each pair of grippers is movably guided on the slide (39).

5. A tool-changer according to claim 2, characterised in that the support (34) bears the swivel member (37) on its front end face and is mounted via a vertical pin (32) on the conveying slide (30) so as to be rotatable through 90°.

6. A tool-changer according to any of claims 1 to 5, characterised in that the two jaws (55, 56) of the grippers (22, 23; 41, 42) are mounted so that they can pivot to a limited extent in cut-outs (61, 62) of a bearing member (50) and their ends have upper and lower sloping surfaces (63, 64) which, on approach of a tool-holder, cause the two jaws (55, 56) to open against the force of a compression spring (54).

**Revendications**

1. Changeur d'outils pour les broches horizontale et verticale de machines à fraiser et à aléser universelles, comprenant une construction porteuse pour au moins une pince de préhension (22, 23) qui est déplaçable sous la commande d'un moteur entre la position d'échange d'outils d'un magasin d'outils (26) et, au choix, la broche horizontale ou la broche verticale, dans lequel deux pinces (22, 23) sont montées au moyen d'un organe porteur (20, 21) sur un organe pivotant (17) dont l'axe de rotation horizontal est orienté – à la position d'échange d'outils concernée – transversalement à l'axe de la broche horizontale ou de la broche verticale, caractérisé en ce qu'un support (12) pour l'organe pivotant (17) est monté déplaçable sur un coulisseau de transport (10) mobile horizontalement et que l'organe porteur pour les pinces (22, 23) est formé par deux bras télescopiques (20, 21) dont les axes se coupent – à la position de changement d'outils – sous un angle aigu et sur l'axe de la broche concernée.

2. Changeur d'outils pour les broches horizontale et verticale de machines à fraiser et à aléser universelles, comprenant une construction porteuse pour au moins une pince de préhension (41, 42) qui est déplaçable sous la commande d'un moteur entre la position d'échange d'outils d'un magasin d'outils (26) et, au choix, la broche horizontale ou la broche verticale, dans lequel deux pinces (22, 23) sont montées au moyen d'un organe porteur (39) sur un organe pivotant (37) dont l'axe de rotation horizontal est orienté – à la position d'échange d'outils concernée – transversalement à l'axe de la broche horizontale ou de la broche verticale, caractérisé en ce qu'un support (34) pour l'organe pivotant (37) est monté déplaçable sur un coulisseau de transport (30) mobile horizontalement et que l'organe porteur pour les pinces (41, 42) est un coulisseau (39) mobile en translation sur l'organe pivotant (37) en forme de plaque et sur le côté frontal duquel les deux pinces (41, 42) sont montées parallèlement l'une à côté de l'autre et de façon à pouvoir être déplacées individuellement.

3. Changeur d'outils selon la revendication 1, caractérisé en ce qu'un étrier (14) est monté rotatif autour d'un axe vertical sur le côté inférieur du support (12) et l'organe pivotant (17), portant les deux bras télescopiques (20, 21), est monté dans les branches (15) dirigées vers le bas de l'étrier rotatif (14).

4. Changeur d'outils selon la revendication 2, caractérisé en ce que les pinces (41, 42) sont coudées et sont disposées mobiles en translation et guidées par une branche sur le coulisseau (39).

5. Changeur d'outils selon la revendication 2, caractérisé en ce que le support (34) porte l'organe pivotant (37) à son côté extrême avant et est monté sur le coulisseau de transport (30) au moyen d'un axe vertical (32) de façon à pouvoir être tourné sur 90°.

6. Changeur d'outils selon l'une des revendications 1 à 5, caractérisé en ce que les deux mâchoires (55, 56) des pinces (22, 23; 41, 42) sont montées pivotantes dans une mesure limitée dans des découpes (61, 62) d'une pièce porteuse (50) et présentent, à leurs extrémités, des faces obliques supérieures et inférieures (63, 64) qui, lors du contact avec un porte-outil, produisent un mouvement d'ouverture des deux mâchoires (55, 56) contre la force d'un ressort de compression (54).

Fig. 1

EP 0 255 567 B1

Fig. 2

EP 0 255 567 B1

Fig.3

EP 0 255 567 B1

Fig. 4

Fig. 5

26

1

8

41

42

A

4

B

C

C

55

Schnitt A-B

Fig.6.

65

63

64

66

67

68

56

A 55

B 69

69

70  71

57

58

72

54

59

60

61

62

53

50

51

52